# EUROPEAN PATENT SPECIFICATION

(11) **EP 1 785 623 B1**
(45) Date of publication and mention of the grant of the patent: **06.05.2009**
(21) Application number: 06122912.6
(22) Date of filing: 25.10.2006
(51) Int. Cl.: F04B 11/00, F04B 49/12, F04B 49/20, G01N 30/32, G01N 30/36

(54) **Pumping apparatus having a varying phase relationship between reciprocating piston motions**
Pumpvorrichtung mit veränderlicher Phasendifferenz zwischen den Pumpkolben
Appareil de pompage avec différence de phases variable entre les pistons de pompage

(43) Date of publication of application: 16.05.2007
(73) Proprietor: Agilent Technologies, Inc., Santa Clara, CA 95051 (US)
(72) Inventor: Witt, Klaus, 75210 Keltern (DE); Wagner, Joachim, 76275 Ettlingen (DE)
(74) Representative: Barth, Daniel Mathias

(56) References cited:
- EP-A2- 0 303 220
- EP-B1- 0 309 596
- DE-A1- 3 203 722
- US-A- 4 681 513
- US-A- 4 808 077

## Description

### BACKGROUND ART

The present invention relates to delivering liquid at a high pressure at which compressibility of the liquid becomes noticeable.

A dual serial pumping apparatus is known e.g. from DE 3203722 A1.

EP 0 309 596 B1 discloses a pumping apparatus for delivering liquid at a high pressure at which compressibility of the liquid becomes noticeable. The known pumping apparatus comprises a first actuator for actuating a first reciprocation piston for pumping at least a part of the fluid and a second actuator for actuating a second reciprocation piston for pumping at least a part of the fluid. The known pumping apparatus also comprises a main drive coupled to the first actuator and to the second actuator. The teaching of that document forms the preamble to claims 1 and 13.

In the known apparatus the coupling between the drive and the actuators is adapted for driving the actuators with different velocities such that the pistons have different stroke lengths between the respective top dead center and the respective bottom dead center. The apparatus is provided with a controller coupled to the drive for adjusting the stroke lengths of each of the pistons. This adjustment depends on the desired flow rate of the liquid delivered by the pumping apparatus, wherein the stroke volume, i.e. the amount of liquid displaced during a pump cycle, being decreased when the flow rate is decreased and vice versa. With help of such an adjustment pulsations in the flow of the liquid delivered by the pumping apparatus can be reduced.

### DISCLOSURE

It is an object of the invention to provide an improved delivering of liquid at a high pressure at which compressibility of the liquid becomes noticeable. The object is solved by the independent claims. Preferred embodiments are shown by the dependent claims.

In order to see how the provision of a variation of a phase relationship between reciprocating motions of the pistons leads to a reduction in the flow pulsations the following is to be considered:

In known pumping apparatuses the drive is coupled to the actuators for providing a predetermined and fixed phase relationship between the reciprocating motions of the pistons. If the apparatus comprises for example two pistons, the two pistons have a phase relationship such that the two pistons always move in opposite directions and never move in the same direction. Accordingly, if the one piston performs its pumping stroke the other piston performs its suction stroke and vice versa. At the beginning of each pumping stroke, i.e. at the bottom dead center of the respective piston, the requested high pressure has to be built-up within a chamber in which the respective piston moves. Due to the noticeable compressibility of the liquid the piston needs a recognizable time for building up the requested high pressure. At the same time the other piston is at the beginning of its suction stroke, i.e. at its top dead center. Due to the noticeable compressibility of the liquid the pressure in a chamber, in which this piston moves, falls according to its elasticity and compressible volume content. Accordingly, the changes between suction strokes and pumping strokes of the pistons result in pulsations in the flow of the liquid delivered by the pumping apparatus. By varying the phase relationship between the reciprocating motions of the pistons it is possible e.g. to timely set the beginning of the pumping stroke of the one piston for building up the high pressure in the respective chamber during a period of time in which the other piston still performs its pumping stroke producing the high pressure in the respective chamber. Accordingly, for a short transition period of time both pistons simultaneously are performing forward pumping strokes.

According to embodiments of the invention the phase relationship between the reciprocating motions of the pistons can be varied by timely shifting a top dead center of one of the pistons to a later time or, alternatively, by timely shifting a bottom dead center of one of the pistons to an earlier time. By timely shifting the top dead center of one of the pistons to a later time the respective piston performs a timely enlarged pumping stroke allowing the other piston to build up the high pressure at the beginning of its own pumping stroke. Alternatively, the time shift of the bottom dead center of the one of the pistons to an earlier time allows the respective piston to build up the high pressure in its chamber before the other piston arrives at the end of its pumping stroke.

According to embodiments of the invention, each actuator comprises a spindle drive comprising a spindle having an external thread and being drive coupled to the main drive, and a nut having an internal thread and being drive coupled to the respective piston. One of these nuts is torque proof guided parallel to the longitudinal extension of the respective spindle by a guiding. The phase shifter comprises an auxiliary drive coupled to the other of the nuts such that the respective nut is moveable parallel to the longitudinal extension of the respective spindle. The respective spindle drive converts a rotary movement of the main drive into a longitudinal movement of the respective piston. By using the auxiliary drive a conversion rate between incoming rotary movements and outgoing longitudinal movements is adjustable within the spindle drive to which the auxiliary drive is assigned to. In particular, the auxiliary drive allows timely shifting the top dead center and the bottom dead center of the piston assigned to the nut which is coupled to the auxiliary drive.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1 schematically shows a separation device or system for separating compounds of a mobile phase incorporating a pumping apparatus according to embodiments of the invention,

Fig. 2 shows another separation device or system as depicted in Fig. 1, but according to another embodiment,

Fig. 3 shows a graphical representation of the motion of a main drive and an auxiliary drive plotted against time for two different stroke volumes,

Fig. 4 shows another graphical representation as depicted in Fig. 3, but of another embodiment.

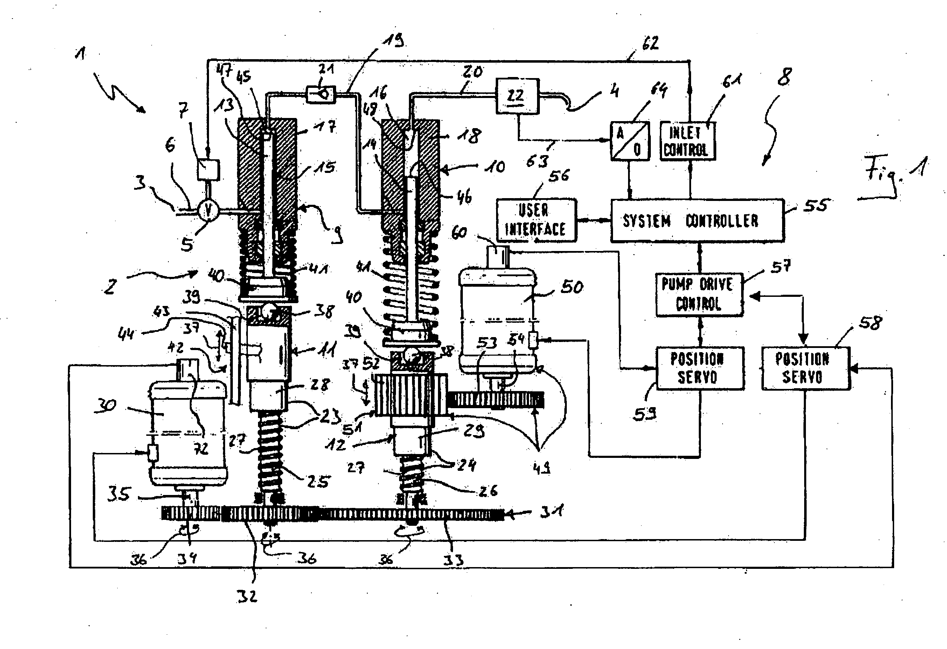

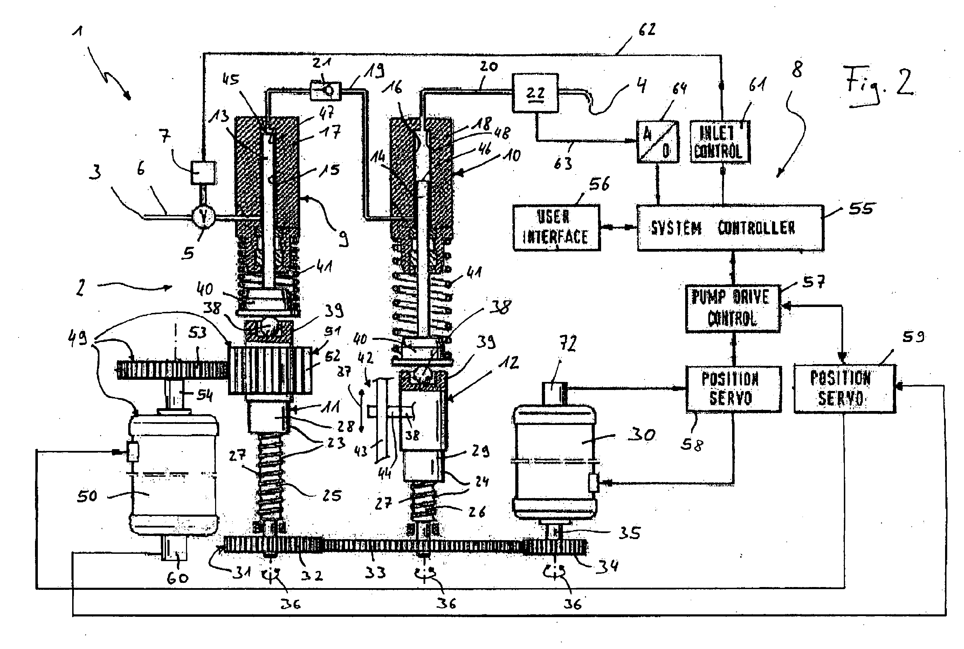

According to Fig. 1 and 2 a separation device 1 or a separation system 1 according to embodiments of the invention comprises at least one pumping apparatus 2. The separation device or system 1 is adapted for separating compounds of a mobile phase, and the pumping apparatus 2 is adapted for driving that mobile phase. In general the pumping apparatus 2 is adapted for delivering liquid (i.e. the mobile phase) at a high pressure at which compressibility of the liquid becomes noticeable. That high pressure can be within a range of 200 bar to 2.000 bar. The pumping apparatus 2 shows an inlet side or inlet port 3 and an outlet side or outlet port 4. The separation device or system 1 additionally may comprise a reservoir or container not shown for storing the mobile phase or liquid, said reservoir or container being connected to the inlet port 3. Further the separation device or system 1 could be equipped with a sampling unit not shown adapted for introducing a sample fluid to the mobile phase or liquid. Such a sampling unit preferably is connected to the outlet port 4. Additionally, the separation device or system 1 may further comprise at least one column device not shown for separating compounds of the mobile phase or liquid, said column device is preferably connected to the outlet of the sampling unit. Downstream of said column device a detector, also not shown, may be arranged adapted for detecting separated compounds of the mobile phase or liquid. Additionally or alternatively, a fractionating unit not shown may be arranged downstream of the column device, said fractionating unit being adapted for selectively outputting separated compounds of the mobile phase or liquid. The separation device or system 1 may be adapted for liquid chromatography or may be part of a liquid chromatograph.

The pumping apparatus 2 comprises an inlet valve 5, controlling an inlet pipe 6. In this embodiment said inlet valve 5 can be closed and opened by a solenoid 7 under the control of a controller or control circuitry 8.

The pumping apparatus 2 comprises at least two pumps, namely a first pump 9 and a second pump 10. For each pump 9, 10 the pumping apparatus 2 comprises a respective actuator, namely a first actuator 11 for driving the first pump 9 and a second actuator 12 for driving the second pump 10. Although, the embodiment depicted in the figs. 1 and 2 are both provided with only two pumps 9, 10 and two actuators 11, 12 the present invention is not restricted to such double-stage pumping apparatuses 2. In fact, said pumping apparatus 2 also can be provided with three or more pumps and three or more actuators, respectively.

Each pump 9, 10 comprises a piston, namely a first piston 13 and a second piston 14, and a chamber, namely a first chamber 15 and a second chamber 16. The pistons 13, 14 are adapted for reciprocating movements inside of the respective chamber 15, 16. The pistons 13, 14 could be made of sapphire. The respective chamber 15, 16 is provided within a housing, namely a first housing 17 comprising the first chamber 15 and a second housing 18 comprising the second chamber 16.

The first chamber 15 is connected to the inlet port 3 by the inlet pipe 6. The first chamber 15 is also connected to the second chamber 16 by a connecting pipe 19 and the second chamber 16 is connected to the outlet port 4 by an outlet pipe 20. The connecting pipe 19 is provided with an outlet valve 21, which can be e.g. a conventional check valve closing in the direction from the second chamber 16 to the first chamber 15. The outlet pipe 20 can be provided with a damping unit 22 which serves for damping any pressure and flow variations which may occur in the outflow of the second pump 10.

In the preferred embodiments depicted in the figs. 1 and 2 the two pumps 9, 10 are connected in series. It should be clear that the present invention is not restricted to such a serial arrangement of the pumps 9, 10, but also includes pumps 9, 10 connected in parallel.

In the depicted preferred embodiments each actuator 11, 12 comprises a spindle drive, namely a first spindle drive 23 and a second spindle drive 24. Each spindle drive 23, 24 comprises a spindle, namely a first spindle 25 and a second spindle 26 each having an external thread 27, and a nut, namely a first nut 28 and a second nut 29 each having an internal thread, which is not shown and which is formed complementary to the external thread 27 of the respective spindle 25, 26. Preferably, the respective spindle drive 23, 24 is a ball-screw spindle drive having a ball (not shown) rolling in the threads 27 of the respective spindle 25, 26 and of the respective nut 28, 29.

The pumping apparatus 2 comprises a main drive 30 adapted for driving the actuators 11, 12. The main drive 30, which preferably is an electromotor, is drive coupled to the inlet sides of the actuators 11, 12. The inlet side of each actuator 11, 12 is represented by its spindle 25, 26. The main drive 30 is coupled to the actuators 11, 12 by a gear 31, comprising several gear wheels, namely a first gear wheel 32 torque proof connected to the first spindle 25, a second gear wheel 33 torque proof connected to the second spindle 26 and a third gear wheel 34 torque proof connected to a shaft 35 of the main drive 30. The gear wheels 32 to 34 are mating for drive coupling the main drive 30 to the actuators 11, 12. The main drive 30 induces a rotary movement in to the gear 31 and therefore into the spindles 25, 26. Said rotary movements are symbolized by arrows 36.

Each spindle drive 23, 24 converts the incoming rotary movement into a longitudinal movement of the respective nut 28, 29 represented by arrows 37. The actuators 11, 12 are drive coupled to the respective pistons 13, 14 via balls 38 arranged in corresponding ball receptions 39. Each ball 38 is contacted to a piston holder 40 supporting the respective piston 13, 14. The pistons 13, 14 are also provided via their piston holders 40 with return springs 41. Each return spring 41 is connected at one of its ends to the respective housing 17, 18 and at its other end to the respective piston holder 40. The return springs 41 are biasing the piston holder 40 and therefore the respective piston 13, 14 towards the respective actuator 11, 12.

According to the embodiments depicted in the figs. 1 and 2 one of the actuators 11, 12 is provided with a guiding 42 cooperating with the respective spindle drive 23, 24. In the depicted embodiment of fig. 1 said guiding 42 is assigned to the first actuator 11 and to the first spindle drive 23, respectively. The guiding 42 is adapted for torque proof guiding the first nut 28 parallel to the longitudinal extension of the first spindle 25. The expression "torque proof" means that the first nut 28 is torque proof with respect to a casing not shown in which the actuators 11, 12 and/or the pumps 9, 10 are arranged. The guiding 42 enables the first nut 28 to move longitudinally parallel to the strokes of the first piston 13. For example, said guiding 42 comprises a rail 43 which is fixed to that casing and a bracket 44 which is fixed to the first nut 28. The rail 43 extends parallel to the longitudinally extension of the first spindle 25 and the bracket 44 is adapted for sliding along the rail 43.

In operation of the main drive 30 the pistons 13, 14 perform reciprocating movements within the respective chambers 15, 16. Each piston 13, 14 performs alternately pumping strokes and suction strokes. During such a pumping stroke the respective piston 13, 14 moves with its front end 45 or 46, respectively, from its bottom dead center towards a front wall 47 or 48, respectively, of the respective chamber 15, 16 to its top dead center. During each pumping stroke the respective piston 13, 14 reduces the volume of the respective chamber 15, 16 and presses liquid out of the respective chamber 15, 16. During each suction stroke the respective piston 13, 14 moves with its front end 45, 46 from its top dead center to its bottom dead center away from the front wall 47, 48 of the respective chamber 15, 16. During said suction stroke the volume of the respective chamber 15, 16 is enlarged and the respective chamber 15, 16 is filled with liquid. Between the reciprocating movements of the two pistons 13, 14 is established a phase relationship such that the two pistons 13, 14 mostly move contrariwise. In other words, when the one piston 13 or 14 performs its pumping stroke the other piston 14 or 13 essentially performs its suction stroke and vice versa. In a conventional pumping apparatus, for example known from previously cited EP 0 309 596 B1 the phase relationship between the movements of the pistons 13, 14 is invariantly fixed such that the two pistons 13, 14 never move in the same direction. The two pistons 13, 14 accordingly have a fixed phase relationship between their reciprocating movements.

The pumping apparatus 2 according to the depicted embodiments of the invention additionally comprises a phase shifter 49. Said phase shifter 49 is adapted for varying the phase relationship between the reciprocating motions of the two pistons 13, 14. In principle, the phase relationship between the movements of the pistons 13, 14 can be adjusted to any value. For the purpose of reducing pressure pulsations in the flow of the liquid delivered by the pumping apparatus 2 relatively small adjustments or small shiftings of the phase relationship between the motions of the pistons 13, 14 are effectual. For example, the realisation of phase shiftings not exceeding 10 % of the stroke period can be sufficient.

In the embodiment depicted in fig. 1 the phase shifter 49 comprises an auxiliary drive 50, which can be for instance an electromotor. The auxiliary drive 50 is drive coupled to the second nut 29, e.g. by a coupling gear 51. The drive coupling between the auxiliary drive 50 and the second nut 29 is adapted for providing motions of the second nut 29 rotationally around the axis of the second spindle 26 and thus introducing an overlayed movement parallel to the longitudinal extension of the second spindle 26. This longitudinal movability between the second nut 29 and the casing (not shown) of the pumping apparatus 2 is provided by the coupling gear 51. To this end the coupling gear 51 comprises a first coupling gear-wheel 52 which is torque proof fixed to the second nut 29, and a second coupling gear-wheel 53 which is torque proof fixed to a shaft 54 of the auxiliary drive 50. The coupling gear-wheels 52, 53 are mating by axial toothing. The axial dimensions of the coupling gear-wheels 52, 53 are adapted for enabling longitudinal movements of the second nut 29 and therefore of the first coupling gear-wheel 52 with respect to the second gear-wheel 53 and therefore with respect to the auxiliary drive 50 which is stationary fixed to the casing of the pumping apparatus 2.

The auxiliary drive 50 preferably is adapted for inducing enough torque into the second nut 29 such that the second nut 29 can move parallel to the longitudinal extension of the second spindle 26 without any rotary motion. In this case the auxiliary drive 50 is controlled by the controller 8 for introducing enough torque into its shaft 54 such that the shaft 54 stands still and does not rotate when the second spindle drive 24 is in operation and the second spindle 26 rotates in order to move the second nut 29 parallel to the longitudinal extension of the second spindle 26. Since the second nut 29 is torque proof guided parallel to the longitudinal extension of the second spindle 26 by the coupling gear 51 when the phase shifter 49 is deactivated and the auxiliary drive 50 is controlled to hold on its shaft 54, the adjusted phase relationship between the motions of the two pistons 13, 14 is fixed. But as soon as the auxiliary drive 50 induces a rotary motion into the second nut 29 the second nut 29 can be adjusted along the second spindle 26 resulting in an adjustment of the phase relationship between the motions of the two pistons 13, 14. The phase shifter 49 varies the conversion rate of the respective spindle drive 23, 24 in order to provide the respective phase shift.

Since the phase shifter 49 is assigned to the second pump 10 the auxiliary drive 50 is, for example, adapted for inducing a rotary motion into the second nut 29 in order to timely shifting the top dead center of the second piston 14 to a timepoint later in order to vary the phase relationship between the reciprocating motions of the pistons 13, 14. Timely shifting the top dead center of the second piston 14 to a later timepoint results in a predetermined and timely limited transition period in which both pistons 13, 14 can move in the same direction such that the first piston 13 can start its pumping stroke while the second piston 14 is still performing its pumping stroke. Due to this specific phase shifting a drop in pressure in the second chamber 16 due to the reversing of the second piston 14 at its top dead center while the first piston 13 still is in compression phase can be avoided or at least significantly reduced. This is because the timely enlarged pumping stroke of the second piston 14 enables the first piston 13 to build up the demanded high pressure within the first chamber 15 to prepare delivery.

While in the embodiment according to fig. 1 the phase shifter 49 cooperates with the second piston 14 in order to provide the requested phase shifting fig. 2 shows an example for an embodiment in which the phase shifter 49 is assigned to the first pump 9 and cooperates with the first piston 13 of the first pump 9 in order to achieve the requested phase shift. In fig. 2 the phase shifter 49 again is symbolised by the auxiliary drive 50 and the coupling gear 51. The auxiliary drive 50 is drive coupled via its coupling gear 51 to the first nut 28. The phase shifter 49 of the embodiment according to fig. 2 operates analogously to the phase shifter 49 of the embodiment according to fig. 1.

It should be clear, that the present invention is not restricted to phase shifters 49 comprising an auxiliary drive 50 and a coupling gear 51. Other embodiments of said phase shifter 49 may for example cooperate with a cam which is situated either between the respective housing 17, 18 and the casing (not shown) of the pumps 9, 10 or between the respective front end 45, 46 of the respective piston 13, 14 and the gear 31. For example, it is, in principle, possible to use said cam instead of the ball 38. In order to shift the phase relationship between the two pistons 13, 14, the cam can be rotated with help of an adequate drive to vary the distance between the respective nut 28, 29 and the respective piston 13, 14.

Since the phase shifter 49 according to fig. 2 is assigned to the first pump 9, the auxiliary drive 50 can be e.g. controlled by the controller 8 for inducing a rotary motion into the first nut 28 in order to timely shift the bottom dead center of the first piston 13 to early in order to vary the phase relationship between the reciprocating motions of the pistons 13, 14. Timely shifting the bottom dead center of the first piston 13 to early also causes the two pistons 13, 14 to move in the same direction for a predetermined, timely limited transition period. In this case the first piston 13 begins its pumping stroke at an earlier point of time at which the second piston 14 still performs its pumping stroke. Due to this specific phase shifting a drop in pressure in the second chamber 16 due to the reversing of the motion of the second piston 14 at its top dead center, while the first piston 13 is still in precompression phase, can be avoided or at least reduced. Because of the timely reduced suction stroke of the first piston 13 the second piston 14 still can maintain the demanded high pressure in the second chamber 16 while the first piston 13 is building up the high pressure in the first chamber 15.

In the preferred embodiments according to the figs. 1 and 2 the pumps 9, 10 are connected in series and the pumping stroke volume of the first piston 13 is twice the pumping stroke volume of the second piston 14. Accordingly, during the pumping stroke of the first piston 13 half of the liquid delivered by the first pump 9 from first chamber 15 is fed into the second chamber 16 thus filling up the second chamber 16 during the suction stroke of the second piston 14. The other half of the liquid delivered by the first pump 9 flows through the second chamber 16 and through the outlet port 4 into the specific devices of the separation system 1 which are arranged downstream of the pumps 9, 10. If the pumps 9, 10 are constructed with identical components the stroke length of the first piston 13 is two times the stroke length of the second piston 14. The serial arrangement of the pumps 9, 10 has the big advantage of feeding back energy into the actuator arrangement during the suction stroke of the second piston 14. During the pumping stroke of the first piston 13 the second piston 14 is pressed into its suction direction by the high pressure of the liquid pumped by the first piston 13. From the second piston 14 forced into its suction direction the second nut 29 is forced to move along the second spindle 26 forcing the second spindle 26 into rotary motion. The rotation of the second spindle 26 is fed via the gear 31 back to the first spindle drive 23 and to the main drive 30, respectively. Due to this energy feedback the main drive 30 can be designed comparatively small.

Due to the compressibility of the liquid at the requested high pressure the transition from the suction stroke of the first piston 13 to the pumping stroke of the first piston 13 results in a drop of pressure in the second chamber 16 when the phase relationship between the motions of the pistons 13, 14 is fixed to a value exactly synchronizing the bottom dead center of the first piston 13 to the top dead center of the second piston 14. As a matter of fact the pressure in the second chamber 16, which has a small volume with the second piston 14 at its top dead center, drops faster than the pressure can be built up in the first chamber 15, which has a big volume with the first piston 13 at its bottom dead center. A fixed phase relationship between the motions of the pistons 13, 14 as used in conventional pumping apparatuses results in pressure pulsations at the outlet port 4 of the pumping apparatus 2. The phase shifter 49 is operated to reduce such pressure pulsations.

In the embodiment depicted in fig. 1 the phase shifter 49 is assigned to the second pump 10. Accordingly, the phase shifter 49 allows an adjustment of the movement of the second piston 14 to vary the phase relationship between the motions of the pistons 13, 14. In order to avoid or at least to reduce the drop of pressure in the second chamber 16 the phase shifter 49 is adapted for timely shifting the top dead center of the second piston 14 to late. Accordingly, the first piston 13 passes through its bottom dead center and builds up the requested high pressure in the first chamber 15 until the second piston 14 arrives at its top dead center. During this relative short transition time both pistons 13, 14 are moving in the same direction, namely in their pumping direction. The second piston 14 is still pumping, while the first piston 13 performs precompression of its liquid in chamber 15 to prepare for pumping. When the second piston 14 arrives at its top dead center and starts its suction stroke the first piston 13 is able to deliver enough liquid at the demanded high pressure immediately. Accordingly, the drop of pressure in the second chamber 16 and therefore at the outlet port 4 is significantly reduced. In the embodiment depicted in fig. 1 the auxiliary drive 50 is adapted for inducing a rotary motion into the second nut 29 in order to timely shift the top dead center of the second piston 14 to late.

During the following suction stroke of the second piston 14 the phase shifter 49 is operated to reverse the phase shift in order to reestablish the original phase relationship between the two pistons 13, 14. In a preferred embodiment at least at the end of the suction stroke of the second piston 14 the motions of the two pistons are synchronized such that the second piston 14 arrives at its bottom dead center essentially at the same time as the first piston 13 arrives at its top dead center.

Referring to fig. 2 it can be seen, that it is also possible to assign the phase shifter 49 to the first pump 9 or to the first piston 13, respectively. In order to avoid or at least to reduce the drop of pressure in the second chamber 16 the phase shifter 49 can be operated to timely shifting the bottom dead center of the first piston 13 to early. As a result of this phase shifting between the motions of the two pistons 13, 14 the first piston 13 passes through its bottom dead center before the second piston 14 arrives at its top dead center. Accordingly, the first piston 13 is enabled to build up the requested high pressure in the first chamber 15 while the second piston 14 is still maintaining the high pressure in the second chamber 16. At the time the second piston 15 arrives at its top dead center and starts its suction stroke the first piston 13 already has built up the requested high pressure and is able to deliver the liquid at the necessary mass flow and at the high pressure. Accordingly, pressure pulsations in the second chamber 16 and therefore at the outlet port 4 are reduced.

The controller 8 or the control circuitry 8 of the pumping apparatus 2 may for example be designed as shown in fig. 1 and 2. Accordingly, the controller 8 or the control circuitry 8, respectively, comprises a system controller 55 controlling the function of the pumping apparatus 2 in response to inputs. Setpoint inputs are made by a user via a user interface 56 coupled to the system controller 55. The user interface 56 can be any know input device, for example a keyboard. The user may input via the user interface 56, for example, a desired flow rate or a desired solvent mixture or a desired solvent gradient. Measurement inputs can be pressure readings from appropriate sensors, e.g. arranged in the damping unit 22 routed via A/D-converter 64.

A pump drive controller 57 is connected to the system controller 55. A main control loop for controlling the movement of the main drive 30 is indicated by block 58, position servo. The actual value for the position of the main drive 30 to be used in the main control loop 58 may be provided from the angular position indicator 72 and the target value is provided from the pump drive controller 57. An auxiliary control loop for controlling the movement of the auxiliary drive 50 is indicated by block 59. The actual value for the position of the auxiliary drive 50 to be used in the auxiliary control loop 59 may be provided from the angular position indicator 60 and the target value is provided from the pump drive controller 57.

Also connected to the system controller 55 may be an inlet controller 61 which controls the opening and the closing of the inlet valve 5 in coordination with the movement of the first piston 13. The control signals are supplied to the solenoid 7 on a line 62.

The pressure of the delivered liquid may be measured by a pressure transducer, which is for example arranged in the damping unit 22. Here the analog output signal of the pressure transducer is supplied on a line 63 to an A/D-converter 64 by which it is converted into a digital signal. This digital signal is supplied to the system controller 55 from which it can be used to control phase shift operation and also passed to the user interface 56 and displayed.

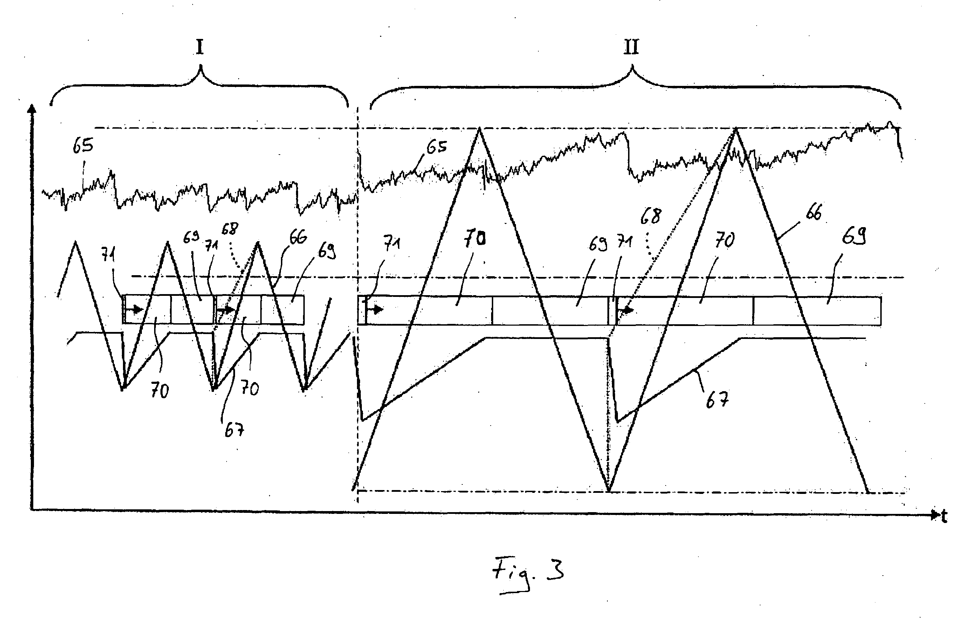

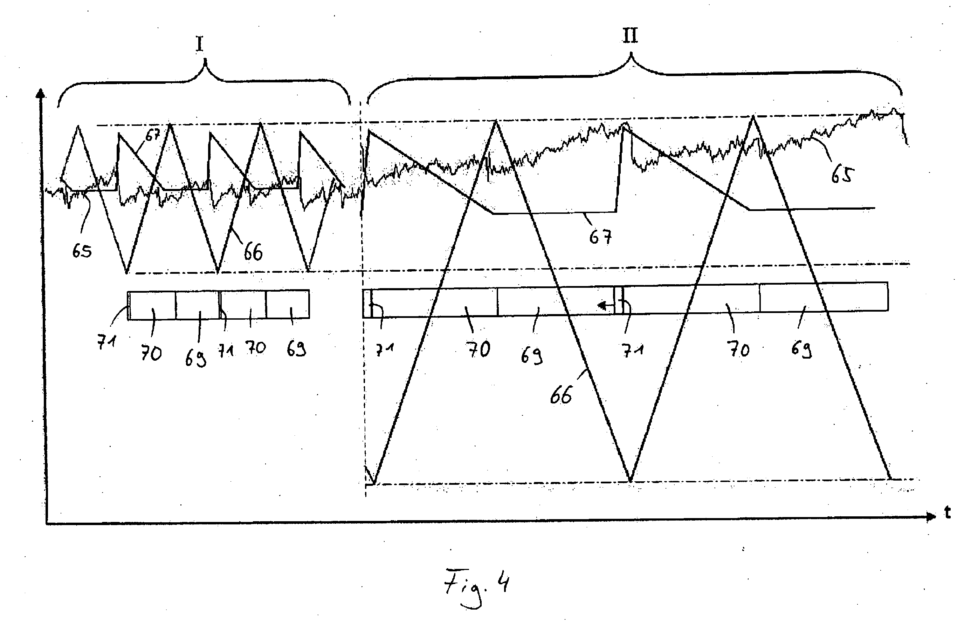

Referring now to the figs. 3 and 4 the operation of the pumping apparatus 2 is described for the two different embodiments shown in fig. 1 and fig. 2. According to the figs. 3 and 4 a line indicated with 65 represents the pressure in the liquid delivered by the pumping apparatus 2 at its outlet port 4 plotted against time t. A line indicated by 66 indicates the operation of the main drive 30 and a line 67 represents the operation of the phase shifter 49 or the auxiliary drive 50, respectively. A dotted line 68 indicates the operation of the main drive 30 in a specific operation mode.

First blocks indicated by 69 each represent the suction stroke of the first piston 13 and the pumping stroke of the second piston 14. Second blocks indicated by 70 each represent the pumping stroke of the first piston 13 and the suction stroke of the second piston 14. With 71 a transition zone or period is indicated, in which both pistons 13, 14 move in the same direction.

On the left side of each of figs. 3 and 4 is represented a first operation mode I in which the pumping apparatus 2 delivers the liquid at a predetermined first stroke length. On the right side of each of the figs. 3 and 4 a second operation mode II is indicated in which the pumping apparatus 2 delivers liquid at a second using a second (longer) stroke length. The first stroke length is smaller than the second stroke length. In both phases I, II the mass flow is meant to be the same. In order to reduce pressure pulsations in the liquid delivered by the pumping apparatus 2 the pumping apparatus 2 may be operated with a higher stroke frequency but with smaller stroke lengths of the pistons 13, 14, which may be of advantage when the mass flow to be delivered is smaller. However, magnitude of disturbance still is significantly higher when compared to the phase shift mode.

If the phase shifter 49 is assigned to the second piston 14 according to the example depicted in fig. 1, the phase shifter 49 - according to a preferred embodiment - can be adapted for displacing the second piston 14 within the second housing 18 in order to reduce a dead volume in the second chamber 16 which occurs between the second front wall 48 and second piston's 14 front end 46 when the second piston 14 is in its top dead center. By reducing the dead volume in the second chamber 16 transition effects can be reduced, when the pumping apparatus 2 operates with shorter stroke lengths and with slower velocities of its pistons 13, 14 while pumping liquid in a gradient mode. It is clear, that this adaption of stroke frequency and stroke length and the reduction of dead volume can be performed additionally to the phase shifting realized by the phase shifter 49 as described.

In the example depicted in fig. 3 the phase shifter 49 is assigned to the second pump 10 according to the embodiment of fig. 1. During the pumping stroke 70 of the first piston 13 both pistons 13, 14 move in opposite direction. The phase relationship between the motions of the pistons 13, 14 is such that the first piston 13 arrives its top dead center nearly at the same time as the second piston 14 arrives at its bottom dead center. In the following suction stroke 69 both pistons 13, 14 again move in opposite directions. As soon as the first piston 13 arrives at its bottom dead center the transition zone 71 begins. This transition zone 71 is characterized by the operation of the phase shifter 49 timely shifting the top dead center of the second piston 14 to late. During the transition period 71 both pistons move in the same direction, namely in the pumping (delivering) direction. This transition zone 71 is designed such that the first piston 13 has enough time to build up the high pressure in the first chamber 15. As soon as the pressure in the first chamber 15 arrives at the requested level the transition zone 71 ends and the phase shifter 49 is operated such that again both pistons 13, 14 move in opposite directions. To reestablish the original phase relationship between the motions of the two pistons 13, 14 the phase shifter 49 is operated to add an additional portion of velocity to the second piston 14 during its suction stroke. At the end of the suction stroke of the second piston 14 the original phase relationship between the pistons 13, 14 may be reestablished. In this embodiment the transition zone 71 begins exactly at the same time as the first piston 13 arrives at its bottom dead center. This can be seen in fig. 3 since each transition zone 71 begins at the lower reversal point of the line 66 representing the operation of the main drive 30.

Accordingly, the line 67 representing the operation of the auxiliary drive 50 shows sharp falling flanks. Each falling flank is followed by a smoothly increasing flank and each increasing flank is followed by a horizontal portion each followed by another falling flank. During each falling flank the auxiliary drive 50 operates inverse or antiparallel to the operation of the main drive 30 for maintaining the pumping stroke of the second piston 14 and for maintaining the high pressure in the second chamber 16. During each increasing flank the auxiliary drive 50 operates parallel to the operation of the main drive 30 in order to smoothly reestablish the original phase relationship between the two pistons 13, 14. During each horizontal portion the auxiliary drive 50 is operated for providing a torque proof guiding for the second nut 29 such that the second nut 29 is torque proof, i.e. without rotation, moveable parallel to the longitudinal extension of the second spindle 26. During these horizontal portion the phase shifter 49 is deactivated.

The dotted line 68 represents the operation of the main drive 30 during a specific operating mode. This specific operation mode is characterized by a timely limited higher driving power of the main drive 30 resulting in a higher speed of rotation and in the end resulting in a higher velocity of at least the first piston 13 at the beginning of its pumping stroke. Accordingly, said dotted line 68 starts at the bottom dead center of the first piston 13 with a very steep increasing flank for a relatively short time. This steep flank is followed by another increasing flank having a smaller gradient. For example, during the steep flank main drive 30 operates with a driving power level resulting in a velocity of the first piston 13 being ten times higher than the velocity of the first piston 13 during the following flank having the smaller incline. This specific operation mode reduces the time necessary for building up the high pressure in the first chamber 15. Accordingly, said specific operation mode reduces pressure pulsations in the liquid delivered by the pumping apparatus 2. It is clear, that this specific operation mode can be performed additionally to the phase shifting realized by the phase shifter 49 as described above. Also it should be clear, that the above mentioned reduction of stroke lengths depending on the liquid mass flow to be delivered can be performed additionally or alternatively to said specific operation mode together with the phase shifting according to embodiments of the present invention.

In the example depicted in fig. 4 the phase shifter 49 is assigned to the first pump 9 as it can be seen for example in the embodiment according to fig. 2. During the pumping stroke 70 of the first piston 13 both pistons 13, 14 move in opposite directions. The first piston 13 arrives in its top dead center at (almost) the same time as the second piston 14 arrives at its bottom dead center. In the following suction stroke 69 of the first piston 13 both pistons 13, 14 also move in opposite directions. In this embodiment the phase shifter 49 is operated in order to timely shift the bottom dead center of the first piston 13 to early. In fig. 4 this can be seen in the position of the transition zone 71 which ends exactly when the second piston 14 arrives at its top dead center which is characterized by the lower reversal point of the line 66 representing the operation of the main drive 30.

Due to this operation of the phase shifter 49 the first piston 13 arrives at its bottom dead center timely before the second piston 14 arrives at its top dead center. The beginning of the transition zone 71 is designed such that the first piston 13 has enough time to build up the requested high pressure in the first chamber 15 until the transition zone 71 ends by the second piston 14 arriving at its top dead center.

During the rest of this pumping stroke 70 of the first piston 13 the phase shifter 49 is operated to reestablish the original phase relationship between the two pistons 13, 14.

The operation of the phase shifter 49 can be derived from the line 67 representing the operation of the auxiliary drive 50. During the transition period 71 the line 67 shows a steeply increasing flank beginning and ending together with the transition period 71. Each inclining flank may be followed by a smoothly falling flank that preferably ends together with the pumping stroke 70 of the first piston 13. Each falling flank may be followed by a horizontal portion of the line 67 extending along the respective suction stroke 69 of the first piston 13. During the inclining flank the auxiliary drive 50 operates antiparallel or inverse to the main drive 30 such that the first piston 13 passes through its bottom dead center and starts building up the high pressure in the first chamber 15 although the main drive 30 is still operated to force the second piston 14 in its pumping (delivering) direction. Accordingly, during the transition zone 71 both pistons 13, 14 move in the same direction, namely in their pumping (delivering) direction. During the falling flank the phase shifter 49 is operated to reestablish the original phase relationship between the two pistons 13, 14. Accordingly, the auxiliary drive 50 operates parallel to the operation of the main drive 30 preferably for the rest of the remaining pumping stroke of the first piston 13. At least at the end of the pumping stroke 70 of the first piston 13 the original phase relationship between the motions of the pistons 13, 14 is reestablished.

The position and in particular the length of the transition period 71 can be determined empirically and stored in an adequate map or characteristic diagram as a function of pressure. Major factors are physical properties of the liquid pumped (mainly compressibility) in combination with technical parameters (mainly elasticity and deadcolume of the pump chamber 15 when the first piston 14 is in its upper dead center position) of the pump setup in use. These parameters can be determined empirically as individual values and stored in adequate maps or characteristic diagrams, preferably all as a function of pressure.

## Claims

1. A pumping apparatus (2), comprising:
- a first actuator (11) for actuating a first reciprocation piston (13) for delivering liquid at a high pressure at which compressibility of the liquid becomes noticeable,
- a second actuator (12) for actuating a second reciprocation piston (14) for delivering liquid at a high pressure at which compressibility of the liquid becomes noticeable, and
- a main drive (30) coupled to the first actuator (11) and to the second actuator (12),
**characterized by**
- a phase shifter (49) for varying a phase relationship between reciprocating motions of the first piston (13) and the second piston (14).

2. The apparatus of claim 1, wherein
the phase shifter (49) is adapted for varying the phase relationship between the reciprocating motions of the pistons (13,14) by timely shifting a top dead center of one of the pistons (13,14) to late or by timely shifting a bottom dead center of one of the pistons (13,14) to early.

3. The apparatus of claim 2 or any one of the above claims, wherein
the phase shifter (49) is adapted for and/or controlled for timely shifting the top dead center of one of the pistons (13,14) to late such that the other piston (13,14) has enough time to build up the high pressure in a chamber (15,16) in which the respective piston (13,14) moves.

4. The apparatus of claim 2 or any one of the above claims, wherein
the phase shifter (49) is adapted for and/or controlled for timely shifting the bottom dead center of one of the pistons (13,14) to early such that the respective piston (13,14) is enabled to build up the high pressure in a chamber (15,16), in which the respective piston (13,14) moves, until the other piston (13,14) reaches its top dead center.

5. The apparatus of claim 1 or any one of the above claims, wherein
the actuators, (11,12) are drive coupled to each other such that the pistons (13,14) move in opposite directions when the phase shifter is deactivated.

6. The apparatus of claim 1 or any one of the above claims, wherein
- each actuator (11,12) comprises a spindle drive (23,24) comprising a spindle (25,26) having an external thread (27) and being drive coupled to the main drive (30), and a nut (28,29) having an internal thread and being drive coupled to the respective piston (13,14),
- one of the nuts (28,29) is torque proof guided parallel to the longitudinal extension of the respective spindle (25,26) by a guiding (42),
- the phase shifter (49) comprises an auxiliary drive (50) coupled to the other of the nuts (28,29) such that the respective nut (28,29) is movable parallel to the longitudinal extension of the respective spindle (25,26).

7. The apparatus of claim 6, wherein
the auxiliary drive (50) is adapted for and/or controlled for inducing enough torque into the respective nut (28,29) such that the respective nut (28,29) is torque proof movable parallel to the longitudinal extension of the respective spindle (25,26) when the phase shifter is deactivated.

8. The apparatus of claim 6, wherein
the auxiliary drive (50) is adapted for and/or controlled for inducing a rotary motion into the respective nut (28,29) such that a top dead center of the respective piston (13,14) is timely shifted to late in order to vary the phase relationship between the reciprocating motions of the pistons (13,14) or such that a bottom dead center of the respective piston (13,14) is timely shifted to early in order to vary the phase relationship between the reciprocating motions of the pistons (13,14).

9. The apparatus of claim 6, wherein
- the coupling between the main drive (30) and the actuators (11,12) is adapted for driving the actuators (11,12) with different velocities such that the pistons (13,14) have different stroke lengths between the respective top dead center and the respective bottom dead center,
- the nut (28,29) drive coupled to the auxiliary drive (50) is assigned to the piston (13,14) having the shorter stroke length,
- a controller (8) is coupled to the main drive (30) for adjusting the stroke length of each of the pistons (13,14),
- the phase shifter (49) is adapted for and/or controlled for displacing the respective nut (28,29) along the respective spindle (25,26) in order to reduce a dead volume between the top dead center of the respective piston (13,14) and a front wall (47,48) of the respective chamber (15,16) in which the respective piston (13,14) moves.

10. The apparatus of claim 1 or any one of the above claims, wherein
- a controller (8) is coupled to the main drive (30) for adjusting a driving power of the main drive (30) at a predetermined and/or selectable value as long as the pistons (13,14) move between their top and bottom dead centers in order to maintain the high pressure and for adjusting the driving power at a predetermined and/or selectable higher value and for a predetermined and/or selectable time when a certain one of the pistons (13,14) reaches its bottom dead center in order to reduce the time necessary for building up the high pressure in a chamber (15,16), in which the respective piston (13,14) moves,
- the phase shifter (49) is adapted for timely shifting the bottom dead center of the certain piston (13,14) to early or for timely shifting a top dead center of the other piston (13,14) to late.

11. The apparatus of claim 1 or any one of the above claims, comprising at least one of the following features:
- the pumping apparatus (2) is adapted for delivering the liquid at a predetermined and/or selectable high pressure;
- the pumping apparatus (2) is adapted for delivering, the liquid at a predetermined and/or selectable flow rate;
- the respective actuator (11,12) is adapted for bidirectionally actuating the respective piston (13,14);
- the pumping apparatus (2) comprises a first pump (9) comprising a first chamber (15) in which the first piston (13) moves;
- the pumping apparatus (2) comprises a second pump (10) comprising a second chamber (16) in which the second piston (14) moves;
- the main drive (30) is coupled to the actuators (11,12) by a gear (31).

12. A separation device or system (1) adapted for separating compounds of a mobile phase and comprising a pumping apparatus (2) of claim 1 or any one of the above claims and being adapted for driving the mobile phase, further comprising at least one of:
- A column device for separating compounds of the mobile phase;
- A sampling unit adapted for introducing a sample fluid to the mobile phase;
- A detector adapted for detecting separated compounds of the mobile phase;
- A fractionating unit adapted for outputting separated compounds of the mobile phase.

13. A pumping method comprising:
- actuating a first reciprocation piston (13) for delivering liquid at a high pressure at which compressibility of the liquid becomes noticeable,
- actuating a second reciprocation piston (14) for delivering liquid at a high pressure at which compressibility of the liquid becomes noticeable, wherein the first reciprocation piston (13) and the second reciprocation piston (14) are coupled by a main drive (30),
**characterized by**
- varying a phase relationship between reciprocating motions of the first piston (13) and the second piston (14).

## Patentansprüche

1. Pumpvorrichtung (2), die aufweist:
- ein erstes Stellglied (11) zum Betätigen eines hin- und herlaufenden Kolbens (13) zum Zuführen einer Flüssigkeit bei einem hohen Druck, bei dem sich die Komprimierbarkeit der Flüssigkeit bemerkbar macht,
- ein zweites Stellglied (12) zum Betätigen eines zweiten hin- und herlaufenden Kolbens (14) zum Zuführen einer Flüssigkeit bei einem hohen Druck, bei dem sich die Komprimierbarkeit der Flüssigkeit bemerkbar macht, und
- einen Hauptantrieb (30), der mit dem ersten Stellglied (11) und mit dem zweiten Stellglied (12) verbunden ist,
**gekennzeichnet durch**
- einen Phasenschieber (49) zum Verändern einer Phasenbeziehung zwischen den Hin- und Herbewegungen des ersten Kolbens (13) und des zweiten Kolbens (14).

2. Vorrichtung nach Anspruch 1, wobei
der Phasenschieber (49) zum Verändern der Phasenbeziehung zwischen den Hin- und Herbewegungen der Kolben (13, 14) durch zeitliches Verschieben eines oberen Totpunktes eines der Kolben (13, 14) nach spät oder durch zeitliches Verschieben eines unteren Totpunktes eines der Kolben (13, 14) nach früh dient.

3. Vorrichtung nach Anspruch 2 oder einem beliebigen der vorhergehenden Ansprüche, wobei
der Phasenschieber (49) dazu dient und/oder so gesteuert wird, den oberen Totpunkt eines der Kolben (13, 14) zeitlich nach spät zu verschieben, sodass dem anderen Kolben (13, 14) ausreichend Zeit zur Verfügung steht, den hohen Druck in einer Kammer (15, 16) aufzubauen, in welchem sich der entsprechende Kolben (13, 14) bewegt.

4. Vorrichtung nach Anspruch 2 oder einem beliebigen der vorhergehenden Ansprüche, wobei
der Phasenschieber (49) dazu dient und/oder so gesteuert wird, dass er den unteren Totpunkt eines der Kolben (13, 14) zeitlich nach früh verschiebt, sodass der entsprechende Kolben (13, 14) in der Lage ist, den hohen Druck in einer Kammer (15, 16), in welcher sich der entsprechende Kolben (13, 14) bewegt, aufzubauen, bis der andere Kolben (13, 14) seinen oberen Totpunkt erreicht.

5. Vorrichtung nach Anspruch 1 oder einem beliebigen der vorhergehenden Ansprüche, wobei
die Stellglieder (11, 12) über den Antrieb so miteinander verbunden sind, dass sich die Kolben (13, 14) in entgegengesetzten Richtungen bewegen, wenn der Phasenschieber deaktiviert ist.

6. Vorrichtung nach Anspruch 1 oder einem beliebigen der vorhergehenden Ansprüche, wobei
- jedes Stellglied (11, 12) einen Spindelantrieb (23, 24) mit einer Spindel (25, 26), die mit einem Außengewinde (27) versehen und mit dem Hauptantrieb (30) verbunden ist, und mit einer Spindelmutter (28, 29) aufweist, die mit einem Innengewinde versehen ist, und wobei der Spindelantrieb antriebsmäßig mit dem entsprechenden Kolben (13, 14) verbunden ist,
- eine der Spindelmuttern (28, 29) durch eine Führung (42) drehfest parallel zur Längsrichtung der entsprechenden Spindel (25, 26) geführt wird,
- der Phasenschieber (49) einen Zusatzantrieb (50) aufweist, der mit der anderen der Spindelmuttern (28, 29) verbunden ist, sodass die entsprechende Spindelmutter (28, 29) parallel zur Längsrichtung der entsprechenden Spindel (25, 26) bewegt werden kann.

7. Vorrichtung nach Anspruch 6, wobei
der Zusatzantrieb (50) dazu dient und/oder so gesteuert wird, dass er auf die entsprechende Spindelmutter (28,29) ein ausreichend hohes Drehmoment ausübt, damit die entsprechende Spindelmutter (28, 29) drehfest parallel zur Längsrichtung der entsprechenden Spindel (25, 26) bewegt werden kann, wenn der Phasenschieber deaktiviert ist.

8. Vorrichtung nach Anspruch 6, wobei
der Zusatzantrieb (50) dazu dient und/oder so gesteuert wird, dass er eine Drehbewegung der entsprechenden Spindelmutter (28,29) derart bewirkt, dass ein oberer Totpunkt des entsprechenden Kolbens (13, 14) zeitlich nach spät verschoben wird, um die Phasenbeziehung zwischen den Hin- und Herbewegungen der Kolben (13, 14) zu verändern, oder dass ein unterer Totpunkt des entsprechenden Kolbens (13, 14) zeitlich nach früh verschoben wird, um die Phasenbeziehung zwischen den Hin- und Herbewegungen der Kolben (13, 14) zu verändern

9. Vorrichtung nach Anspruch 6, wobei
- die Verbindung zwischen dem Hauptantrieb (30) und den Stellgliedern (11, 12) dazu dient, die Stellglieder (11, 12) mit unterschiedlichen Geschwindigkeiten anzutreiben, damit die Kolben (13, 14) zwischen dem jeweiligen oberen Totpunkt und dem jeweiligen unteren Totpunkt unterschiedliche Hublängen zurücklegen,
- die mit dem Zusatzantrieb (50) verbundene Spindelmutter (28, 29) dem Kolben (13, 14) mit der kürzeren Hublänge zugeordnet ist,
- eine Steuereinheit (8) mit dem Hauptantrieb (30) verbunden ist, um die Hublänge jedes der Kolben (13, 14) zu regulieren,
- der Phasenschieber (49) dazu dient und/oder so gesteuert wird, dass die entsprechende Spindelmutter (28, 29) entlang der entsprechenden Spindel (25, 26) verschoben wird, um ein Totvolumen zwischen dem oberen Totpunkt des entsprechenden Kolbens (13, 14) und einer Vorderwand (47, 48) der entsprechenden Kammer (15, 16) zu verringern, in welcher sich der entsprechende Kolben (13, 14) bewegt.

10. Vorrichtung nach Anspruch 1 oder einem beliebigen der vorhergehenden Ansprüche, wobei
- eine Steuereinheit (8) mit dem Hauptantrieb (30) verbunden ist, um eine Antriebsleistung des Hauptantriebs (30) auf einen vorgegebenen und/oder auswählbaren Wert einzustellen, solange sich die Kolben (13, 14) zwischen ihrem oberen und unteren Totpunkt bewegen, damit der hohe Druck aufrechterhalten bleibt, und um die Antriebsleistung auf einen vorgegebenen und/oder auswählbaren höheren Wert und für eine vorgegebene und/oder auswählbare Zeitdauer einzustellen, wenn ein bestimmter Kolben der Kolben (13, 14) seinen unteren Totpunkt erreicht, um die Zeitdauer zum Aufbauen des hohen Drucks in einer Kammer (15, 16), in welcher sich der entsprechende Kolben (13, 14) bewegt, zu verkürzen,
- der Phasenschieber (49) dazu dient, den unteren Totpunkt des bestimmten Kolbens (13, 14) zeitlich nach früh oder den oberen Totpunkt des anderen Kolbens (13, 14) zeitlich nach spät zu verschieben.

11. Vorrichtung nach Anspruch 1 oder einem beliebigen der vorhergehenden Ansprüche, wobei die Vorrichtung mindestens eines der folgenden Merkmale aufweist:
- die Pumpvorrichtung (2) dient dazu, die Flüssigkeit bei einem vorgegebenen und/oder auswählbaren hohen Druck zuzuführen;
- die Pumpvorrichtung (2) dient dazu, die Flüssigkeit bei einer vorgegebenen und/oder auswählbaren Fließgeschwindigkeit zuzuführen;
- das entsprechende Stellglied (11, 12) dient dazu, den entsprechenden Kolben (13, 14) in beiden Richtungen zu betätigen;
- die Pumpvorrichtung (2) weist eine erste Pumpe (9) mit einer ersten Kammer (15) auf, in welcher sich der erste Kolben (13) bewegt;
- die Pumpvorrichtung (2) weist eine zweite Pumpe (10) mit einer zweiten Kammer (16) auf, in welcher sich der zweite Kolben (14) bewegt;
- der Hauptantrieb (30) ist durch ein Getriebe (31) mit den Stellgliedern (11, 12) verbunden.

12. Trenneinrichtung oder -system (1), das zum Trennen von Verbindungen einer mobilen Phase dient und eine Pumpvorrichtung (2) nach Anspruch 1 oder einem beliebigen der vorhergehenden Ansprüche aufweist, die zum Befördern der mobilen Phase dient, wobei das Trennsystem ferner mindestens eines der folgenden Merkmale aufweist:
- eine Trennsäule zum Trennen von Verbindungen der mobilen Phase;
- eine Dosiereinheit zum Einführen einer Probenflüssigkeit in die mobile Phase;
- einen Detektor zum Detektieren der getrennten Verbindungen der mobilen Phase;
- eine Fraktioniereinheit zum Ausgeben der getrennten Verbindungen der mobilen Phase.

13. Pumpverfahren, das aufweist:
- Betätigen eines ersten hin- und herlaufenden Kolbens (13) zum Zuführen einer Flüssigkeit bei einem hohen Druck, bei dem sich die Komprimierbarkeit der Flüssigkeit bemerkbar macht,
- Betätigen eines zweiten hin- und herlaufenden Kolbens (14) zum Zuführen einer Flüssigkeit bei einem hohen Druck, bei dem sich die Komprimierbarkeit der Flüssigkeit bemerkbar macht, wobei der erste hin- und herlaufende Kolben (13) und der zweite hin- und herlaufende Kolben (14) durch einen Hauptantrieb (30) miteinander verbunden sind,
**gekennzeichnet durch**
- Verändern einer Phasenbeziehung zwischen den Hin- und Herbewegungen des ersten Kolbens (13) und des zweiten Kolbens (14).

## Revendications

1. Appareil de pompage (2), comprenant :
- un premier actionneur (11) pour actionner un premier piston alternatif (13) pour distribuer un liquide à une haute pression à laquelle la compressibilité du liquide devient visible ;
- un deuxième actionneur (12) pour actionner un deuxième piston alternatif (14) pour distribuer un liquide à une haute pression à laquelle la compressibilité du liquide devient visible, et
- un entraînement principal (30) couplé au premier actionneur (11) et au deuxième actionneur (12) ;
**caractérisé par**
- un déphaseur (49) pour varier un rapport de phase entre des mouvements alternatifs du premier piston (13) et du deuxième piston (14).

2. Appareil suivant la revendication 1, dans lequel
le déphaseur (49) est à même de varier le rapport de phase entre les mouvements alternatifs des pistons (13, 14) en décalant au moment opportun un point mort haut d'un des pistons (13, 14) vers tard ou en décalant au moment opportun un point mort bas d'un des pistons (13, 14) vers tôt.

3. Appareil suivant la revendication 2 ou l'une quelconque des revendications précédentes, dans lequel
le déphaseur (49) est à même de et/ou est commandé pour décaler au moment opportun le point mort haut d'un des pistons (13, 14) vers tard de sorte que l'autre piston (13, 14) ait suffisamment de temps pour accumuler la haute pression dans une chambre (15, 16) dans laquelle se déplace le piston respectif (13, 14).

4. Appareil suivant la revendication 2 ou l'une quelconque des revendications précédentes, dans lequel
le déphaseur (49) est à même de et/ou est commandé pour décaler au moment opportun le point mort bas d'un des pistons (13, 14) vers tôt de sorte que le piston respectif (13, 14) puisse accumuler la haute pression dans une chambre (15, 16), dans laquelle se déplace le piston respectif (13, 14), jusqu'à ce que l'autre piston (13, 14) atteigne son point mort haut.

5. Appareil suivant la revendication 1 ou l'une quelconque des revendications précédentes, dans lequel
les actionneurs (11, 12) sont couplés par entraînement l'un à l'autre de sorte que les pistons (13, 14) se déplacent dans des directions opposées lorsque le déphaseur est désactivé.

6. Appareil suivant la revendication 1 ou l'une quelconque des revendications précédentes, dans lequel
- chaque actionneur (11, 12) comprend une commande de broche (23, 24) comprenant une broche (25, 26) comportant un filet externe (27) et étant couplée par entraînement à l'entraînement principal (30), et un écrou (28, 29) comportant un filet interne et étant couplé par entraînement au piston respectif (13, 14) ;
- l'un des écrous (28, 29) est guidé par essai de couple parallèlement à l'extension longitudinale de la broche respective (25, 26) par un guide (42) ;
- le déphaseur (49) comprend un entraînement auxiliaire (50) couplé à l'autre des écrous (28, 29) de sorte que l'écrou respectif (28, 29) peut se déplacer parallèlement à l'extension longitudinale de la broche respective (25, 26).

7. Appareil suivant la revendication 6, dans lequel
l'entraînement auxiliaire (50) est à même de et/ou est commandé pour induire un couple suffisant dans l'écrou respectif (28, 29) de sorte que l'écrou respectif (28, 29) peut se déplacer par essai de couple parallèlement à l'extension longitudinale de la broche respective (25, 26) lorsque le déphaseur est désactivé.

8. Appareil suivant la revendication 6, dans lequel
l'entrainement auxiliaire (50) est à même de et/ou est commandé pour induire un mouvement rotatif dans l'écrou respectif (28, 29) de sorte qu'un point mort haut du piston respectif (13, 14) est décalé au moment opportun vers tard afin de varier le rapport de phase entre les mouvements alternatifs des pistons (13, 14) ou de sorte qu'un point mort bas du piston respectif (13, 14) est décalé vers tôt au moment opportun afin de varier le rapport de phase entre les mouvements alternatifs des pistons (13, 14).

9. Appareil suivant la revendication 6, dans lequel
- le couplage entre l'entraînement principal (30) et les actionneurs (11, 12) est à même d'entraîner les actionneurs (11, 12) à des vitesses différentes de sorte que les pistons (13, 14) présentent des longueurs de course différentes entre le point mort haut respectif et le point mort bas respectif ;
- l'écrou (28, 29) couplé par entraînement à l'entraînement auxiliaire (50) est attribué au piston (13, 14) dont la longueur de course est la plus courte ;
- un régulateur (8) est couplé à l'entraînement principal (30) pour régler la longueur de course de chacun des pistons (13, 14) ;
- le déphaseur (49) est à même de et/ou est commandé pour déplacer l'écrou respectif (28, 29) le long de la broche respective (25, 26) afin de réduire un espace mort entre le point mort haut du piston respectif (13, 14) et une paroi avant (47, 48) de la chambre respective (15, 16) dans laquelle se déplace le piston respectif (13, 14).

10. Appareil suivant la revendication 1 ou l'une quelconque des revendications précédentes, dans lequel
- un régulateur (8) est couplé à l'entraînement principal (30) pour régler une puissance motrice de l'entraînement principal (30) à une valeur prédéterminée et/ou sélectionnable aussi longtemps que les pistons (13, 14) se déplacent entre leur point mort haut et leur point mort bas afin de maintenir la haute pression et pour régler la puissance motrice à une valeur supérieure prédéterminée et/ou sélectionnable et pendant un laps de temps prédéterminé et/ou sélectionnable lorsqu'un certain des pistons (13, 14) atteint son point mort bas afin de réduire le temps nécessaire pour accumuler la haute pression dans une chambre (15, 16), dans laquelle se déplace le piston respectif (13, 14) ;
- le déphaseur (49) est à même de décaler au moment opportun le point mort bas du certain piston (13, 14) vers tôt ou de décaler au moment opportun un point mort haut de l'autre piston (13, 14) vers tard.

11. Appareil suivant la revendication 1 ou l'une quelconque des revendications précédentes, comprenant au moins une des particularités suivantes :
- l'appareil de pompage (2) est à même de distribuer le liquide à une haute pression prédéterminée et/ou sélectionnable ;
- l'appareil de pompage (2) est à même de distribuer le liquide à un débit prédéterminé et/ou sélectionnable ;
- l'actionneur respectif (11, 12) est à même d'actionner de manière bidirectionnelle le piston respectif (13, 14) ;
- l'appareil de pompage (2) comprend une première pompe (9) comprenant une première chambre (15) dans laquelle se déplace le premier piston (13) ;
- l'appareil de pompage (2) comprend une deuxième pompe (10) comprenant une deuxième chambre (16) dans laquelle se déplace le deuxième piston (14) ;
- l'entraînement principal (30) est couplé aux actionneurs (11, 12) par un engrenage (31).

12. Dispositif ou système de séparation (1) à même de séparer des composés d'une phase mobile et comprenant un appareil de pompage (2) suivant la revendication 1 ou suivant l'une quelconque des revendications précédentes et étant à même d'entraîner la phase mobile, comprenant en outre au moins un des éléments suivants :
- un dispositif à colonne pour séparer des composés de la phase mobile ;
- une unité d'échantillonnage à même d'introduire un liquide échantillon dans la phase mobile ;
- un détecteur à même de détecter des composés séparés de la phase mobile ;
- une unité de fractionnement à même de fournir en sortie des composés séparés de la phase mobile.

13. Un procédé de pompage comprenant :
- l'actionnement d'un premier piston alternatif (13) pour distribuer un liquide à une haute pression à laquelle la compressibilité du liquide devient visible ;
- l'actionnement d'un deuxième piston alternatif (14) pour distribuer un liquide à une haute pression à laquelle la compressibilité du liquide devient visible ;
dans lequel le premier piston alternatif (13) et le deuxième piston alternatif (14) sont couplés par un entraînement principal (30) ;
**caractérisé par**
- la variation d'un rapport de phase entre des mouvements alternatifs du premier piston (13) et du deuxième piston (14).
